# EUROPEAN PATENT APPLICATION

(11) **EP 1 452 349 A2**
(43) Date of publication of application: **01.09.2004**
(21) Application number: 04000744.5
(22) Date of filing: 15.01.2004
(51) Int. Cl.: B60C 23/04

(54) **Transmitter of tire condition monitoring apparatus and tire condition monitoring apparatus**

(30) Priority: 28.02.2003 JP 2003054086
(71) Applicant: Pacific Industrial Co., Ltd., Ogaki-shi, Gifu-ken 503-8603 (JP)
(72) Inventor: Miwa, Yasuhiro, Ogaki-shi Gifu-ken 503-8603 (JP)
(74) Representative: Breit, Ulrich

(57) **Abstract**

Transmitters (30) of a tire condition monitoring apparatus are provided in the tires at the left side of a vehicle and in the tires at the right side of the vehicle. Each transmitter (30) has a pressure sensor (32) and a temperature sensor (33) for detecting conditions of the associated tire. Each transmitter (30) wirelessly transmits data representing the condition of the associated tire detected by the sensors (32, 33). Each transmitter (30) has an acceleration detection sensor (34) for detecting a direction of acceleration due to rotation of the associated tire (20). Based on data representing the direction of acceleration detected by the acceleration detection sensor (34), whether the transmitter (30) is located in the tire at the left side or in the tire at the right side is identified.

## Description

The present invention relates to a transmitter of a tire condition monitoring apparatus and to a tire condition monitoring apparatus. More particularly, the present invention pertains to a wireless tire condition monitoring apparatus and a transmitter used in the apparatus that permit a driver in a vehicle passenger compartment to check conditions of tires, such as the air pressure.

Wireless tire condition monitoring apparatuses that allow a driver in a vehicle passenger compartment to check the conditions of vehicle tires have been used. One such monitoring apparatus includes transmitters. Each transmitter detects condition, such as the pressure and the temperature, of an associated tire, and wirelessly transmits data representing the detected tire conditions. A receiver for receiving the data from the transmitters is provided on the vehicle body.

The transmitters are each provided in a tire attached to the vehicle. The receiver includes reception antennas each corresponding to one of the transmitters. Each reception antenna induces a voltage that corresponds to the electric field strength of radio waves transmitted from the corresponding transmitter. To obtain necessary data from voltage signals induced by the reception antennas, the receiver processes the voltage signals.

When receiving data, the receiver must distinguish which one of the transmitters has wirelessly sent the data. Accordingly, to distinguish one of the antennas that has the greatest level of induced voltage, a receiver of a tire condition monitoring apparatus disclosed in Japanese Laid-Open Patent Publication No. 10-104103 uses a multiplexer circuit to switch the reception antennas such that only one of the antennas is activated at a time. The antenna that is activated when the voltage signal level is highest is determined to be the closest one to the transmitter that has sent data. Thus, the positions of the tires are determined.

However, in the configuration of the above publication, the number of the reception antennas must be equal to the number of the tires. Also, to increase the level of induced voltage, each reception antenna must be located in the vicinity of the corresponding tire, which limits the method for installing the antennas.

Further, since only one of the reception antennas is activated at a time to distinguish the transmitters, the level of each obtained voltage signal is relatively low. Therefore, it is difficult to perform the distinction procedure of the transmitters accurately and reliably.

The positions of the tires are identified when data from the transmitters is received by the receiver through the reception antenna, and the received data is properly processed. However, besides the identification of the positions of the tires, the receiver performs other procedures such as determination of whether the pressure and the temperature in the tires are normal. Accordingly, the load of data processing on the receiver is increased.

Accordingly, it is an objective of the present invention to provide a transmitter of a tire condition monitoring apparatus and a tire condition monitoring apparatus, which permit whether the transmitter is located in any one of left tires or in any one of right tires to be identified to decrease the load of data processing on a receiver combined with the transmitter.

To achieve the foregoing and other objectives and in accordance with the purpose of the present invention, transmitters for a tire condition monitoring apparatus are provided. One of the transmitters is provided in a tire located at a left side of a vehicle, and another transmitter is provided in a tire located at a right side of the vehicle. Each transmitter includes a condition detection device for detecting condition of the tire, and an acceleration detection device for detecting a direction of acceleration due to rotation of the associated tire. Based on data representing the direction of acceleration detected by each acceleration detection device, whether the associated transmitter is located in the tire at the left side or in the tire at the right side is identified, and data representing condition of the associated tire detected by the associated condition detection device is wirelessly transmitted.

The present invention also provides a tire condition monitoring apparatus for monitoring condition of a tire located at a left side of a vehicle and a tire located at a right side of the vehicle. The apparatus includes transmitters each located in one of the tires. Each transmitter includes a condition detection device for detecting condition of the associated tire, and an acceleration detection device for detecting a direction of acceleration due to rotation of the associated tire. Based on data representing the direction of acceleration detected by each acceleration detection device, whether the associated transmitter is located in the tire at the left side or in the tire at the right side is identified, and data representing condition of the associated tire detected by the associated condition detection device is wirelessly transmitted. The tire condition monitoring apparatus also includes trigger signal transmission devices. The trigger signal transmission devices are located in the vicinity of the tires to correspond to the transmitters. Each transmitter includes a trigger signal detection device. When a trigger signal is detected by the trigger signal detection devices, the transmitters wirelessly transmit data representing the condition of the tires at different timings based on whether each transmitter is located in the tire at the left side or in the tire at the right side. The tire condition monitoring apparatus further includes a reception antenna for receiving data wirelessly transmitted by the transmitters, and a receiver for processing data received by the reception antenna.

Other aspects and advantages of the invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a diagrammatic view showing a tire condition monitoring apparatus according to one embodiment of the present invention;
Fig. 2 is a block diagram showing one of the transmitters shown in Fig. 1;
Fig. 3 is a time chart showing angular acceleration data detected by an angular acceleration sensor;
Fig. 4 is a block diagram showing a receiver;
Fig. 5 is a diagrammatic view showing a tire condition monitoring apparatus according to another embodiment of the present invention; and
Fig. 6 is a timing chart showing times at which transmitters in front and rear left tires and front and rear right tires wirelessly transmit signals.

A tire condition monitoring apparatus 1 according to one embodiment will now be described with reference to the drawings. The apparatus 1 is used in a vehicle such as an automobile.

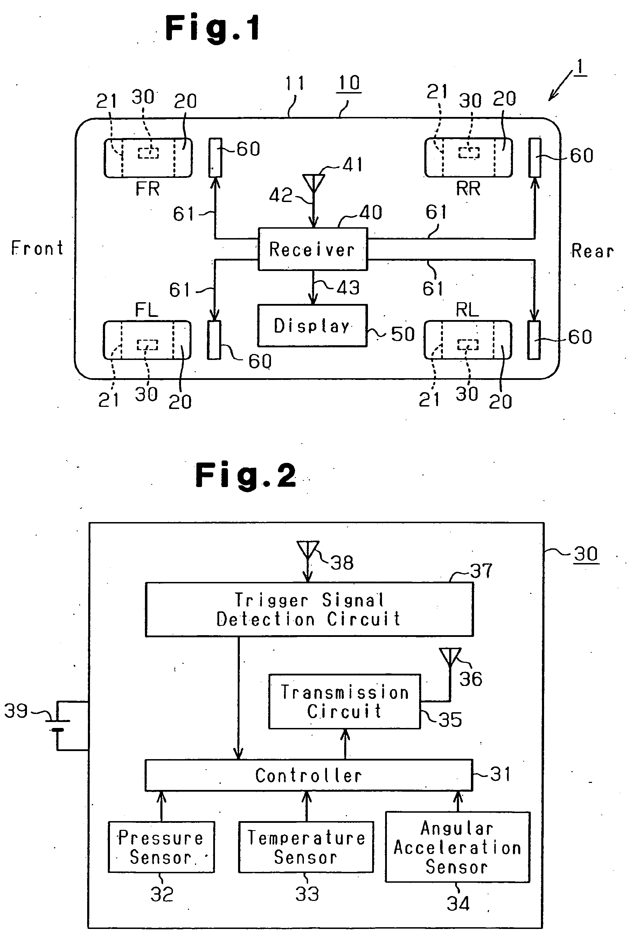

As shown in Fig. 1, the tire condition monitoring apparatus 1 includes four transmitters 30 and a receiver 40. Each transmitter 30 is located in one of the tires 20 of a vehicle 10. The receiver 40 is located on a body frame 11 of the vehicle 10.

The vehicle 10 has four tires 20. Two of the tires 20 are provided at front and rear left wheel positions (FL, RL) and the other two tires 20 are provided at front and rear right rear wheel positions (FR, RR).

Each transmitter 30 is located in the corresponding tire 20 and is fixed, for example, to a wheel 21 of the tire 20. Each transmitter 30 measures the condition of the corresponding tire 20, that is, the pressure and the temperature of the tire 20. The transmitter 30 then wirelessly transmits data containing air pressure data and temperature data.

The receiver 40 is located at a predetermined position on the body frame 11 and is activated by electricity of a battery (not shown) of the vehicle 10. The receiver 40 includes a single reception antenna 41. The reception antenna 41 is connected to the receiver 40 with a cable 42. The receiver 40 receives data wirelessly transmitted by the transmitters 30 through the reception antenna 41.

A display 50 is located in the view of the driver of the vehicle 10, for example, in the passenger compartment. The display 50 is connected to the receiver 40 with a cable 43.

The receiver 40 has four initiators 60, each of which corresponds to different one of the transmitters 30. Each initiator 60 is connected to the receiver 40 with a cable 61. Each initiator 60 is provided in the vicinity of the corresponding tire 20. For example, each initiator 60 is provided in a wheel well or a splash guard of the corresponding tire 20. Each initiator 60 is controlled by the receiver 40 and wirelessly transmits a trigger signal of low frequency (for example, 125 kHz). The initiators 60 function as trigger signal transmitting means.

When detecting a trigger signal from the corresponding initiator 60, each transmitter 30 measures the air pressure and the temperature in the associated tire 20. Also, when detecting a trigger signal from the corresponding initiator 60, each transmitter 30 identifies whether the transmitter 30 is located in any of the tires 20 at the front and rear left wheel positions (FL, RL) or any of the tires 20 at the front and rear right wheel positions (FR, RR), and wirelessly transmits data containing air pressure data and temperature data obtained through measurement.

As shown in Fig. 2, each transmitter 30 includes a transmission controller 31, which is a microcomputer. The controller 31 includes, for example, a central processing unit (CPU), a read only memory (ROM), and a random access memory (RAM). A unique ID code is registered in an internal memory, for example, the ROM, of the controller 31. The ID code is used to distinguish the associated transmitter 30 from the other three transmitters 30.

The tire pressure sensor 32 measures the air pressure in the interior of the associated tire 20 and provides the controller 31 with pressure data, which is obtained from the measurement. The temperature sensor 33 measures the temperature in the interior of the associated tire 20 and provides the transmission controller 31 with temperature data, which is obtained from the measurement. The pressure sensors 32 and the temperature sensors 33 function as condition detecting means.

Each transmission controller 31 sends the air pressure data, the temperature data, and the registered ID code to a transmission circuit 35.

The transmission circuit 35 encodes and modulates the data sent from the transmission controller 31. The transmission circuit 36 then wirelessly sends the data through the antenna 35.

A trigger signal detection circuit 37 detects a trigger signal from the associated initiator 60 through a trigger signal reception antenna 38. When detecting a trigger signal, the trigger signal detection circuit 37 sends to the transmission controller 31 a signal representing the detection of the trigger signal.

Each transmitter 30 is provided with a battery 39. The transmitter 30 is driven by electricity of the battery 39.

The transmission controller 31 of each transmitter 30 controls the pressure sensor 32 and the temperature sensor 33 to perform measurement at predetermined time intervals (for example, every fifteen seconds). When a trigger signal is detected with the trigger signal reception antenna 38, the transmission controller 31 controls the pressure sensor 32 and the temperature sensor 33 to perform measurement. Also, the transmission controller 31 controls the transmission circuit 35 to perform periodic transmission every time the pressure sensor 32 and the temperature sensor 33 complete a predetermined number of (for example, forty cycles of) measurements. Further, when detecting an abnormality of the pressure in the tire 20, the controller 31 causes the transmission circuit 35 to perform transmission irrespective of timing of the periodic transmission. The timing of transmission of the transmitters 30 is regulated such that each transmitter 30 performs transmission at a timing different from those of the other transmitters 30. Therefore, two or more of the transmitters 30 do not perform transmission simultaneously.

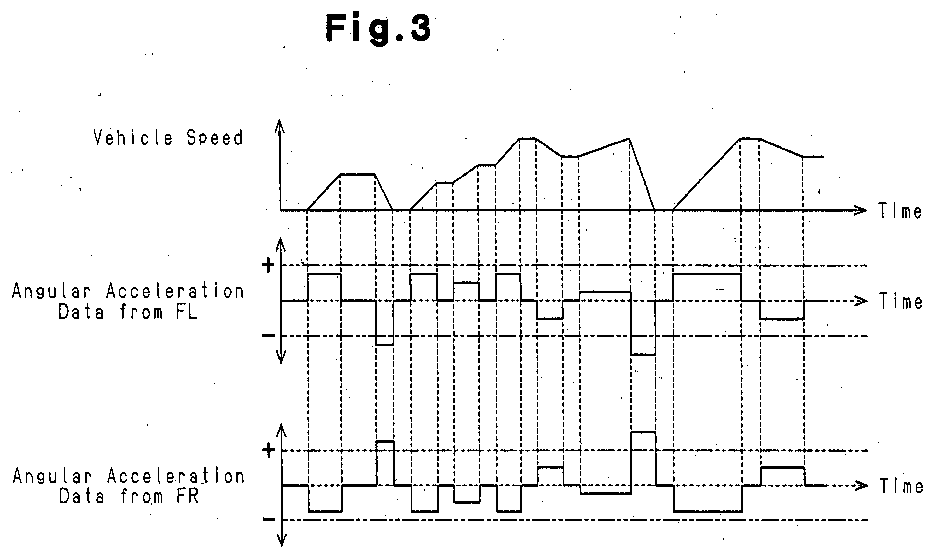

As shown in Fig. 2, each transmitter 30 has an angular acceleration sensor 34, which function as acceleration detecting means. As shown in Fig. 3, each angular acceleration sensor 34 outputs to the corresponding transmission controller 31 acceleration data based on rotation of the corresponding tire 20. The acceleration data is referred to as angular acceleration data and represents the direction of rotation of the tire 20.

For example, when the vehicle 10 is accelerating, the angular acceleration sensor 34 at the front left wheel position (FL) outputs to the transmission controller 31 an angular acceleration data having a positive value that corresponds to a positive acceleration. When the vehicle 10 is decelerating, the angular acceleration sensor 34 at the front left wheel position (FL) outputs to the transmission controller 31 an angular acceleration data having a negative value that corresponds to a negative acceleration. As viewed from the sides of the vehicle 10, the tire 20 at the front right wheel position (FR) rotates in the reverse direction relative to the tire 20 at the front left wheel position (FL). Therefore, when the vehicle 10 is accelerating, the angular acceleration sensor 34 at the front right wheel position (FR) outputs to the transmission controller 31 an angular acceleration data having a negative value that corresponds to a positive acceleration. When the vehicle 10 is decelerating, the angular acceleration sensor 34 at the front right wheel position (FR) outputs to the transmission controller 31 an angular acceleration data having a positive value that corresponds to a negative acceleration. The angular acceleration sensors 34 at the rear left wheel position (RL) and the rear right wheel position (RR) operate in the same manner as the angular acceleration sensors 34 at the front wheel positions (FL, FR). Therefore, based on angular acceleration data from the associated angular acceleration sensor 34, the transmission controller 31 of each transmitter 30 is capable of identifying whether the transmission controller 31 is located in any of the tires 20 at the front and rear left wheel positions (FL, RL) or in any of the tires 20 at the front and rear right wheel positions (FR, RR).

Then, the transmission controller 31 of each transmitter 30 stores the obtained result of identification in the RAM until a contrary result is obtained. In other words, the transmission controller 31 of each transmitter 30 retains the identification results until the corresponding tire 20 is moved from one of the front and rear right wheel positions (FR, RR) to one of the front and rear left wheel positions (FL, RL), or from one of the front and rear left wheel positions (FL, RL) to one of the front and rear right wheel positions (FR, RR).

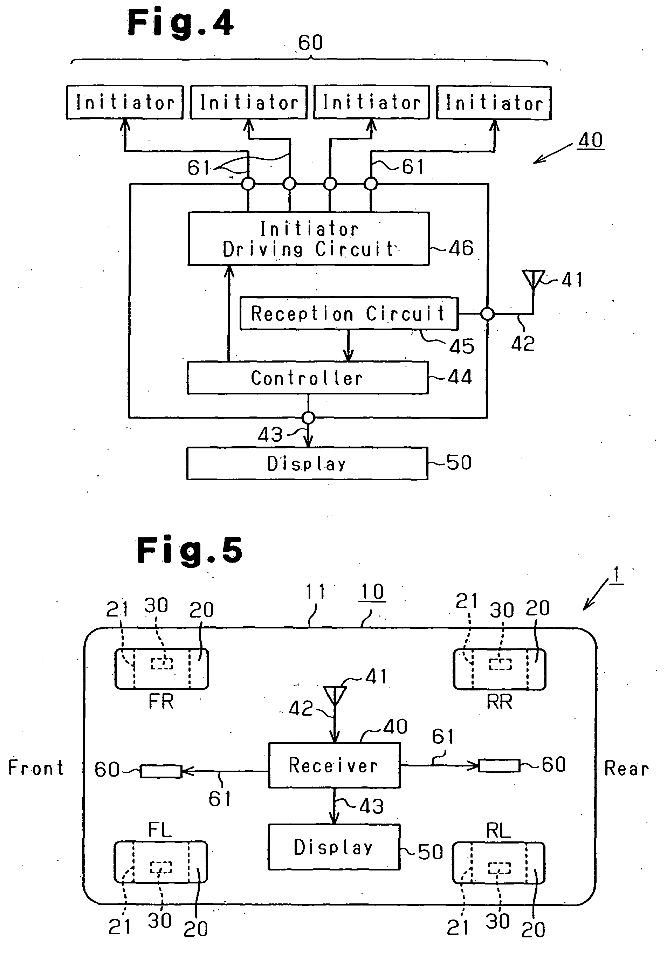

As shown in Fig. 4, the receiver 40 includes a reception controller 44 and a reception circuit 45. The reception controller 44 processes data received with the reception antenna 41. The reception controller 44, which is, for example, a microcomputer, includes a CPU, a ROM, and a RAM. The reception circuit 45 receives data transmitted by the transmitters 30 through the reception antenna 41. The reception circuit 45 demodulates and decodes the received data and sends the data to the reception controller 44.

Based on the received data, the reception controller 44 obtains the internal pressure and the temperature of the tire 20 that are associated with the transmitter 30 that is the source of the received data. The reception controller 44 also causes the display 50 to show data regarding the air pressure and the temperature. Particularly, when there is an abnormality in the internal pressure or the temperature of the tire 20, the reception controller 44 displays warning on the display 50.

Each initiator 60 corresponds to different one of the transmitters 30. The receiver 40 has an initiator driving circuit 46 to drive the initiators 60. The initiator driving circuit 46 is controlled by the reception controller 44 and wirelessly transmits trigger signals from the initiators 60, each of which corresponds to one of the transmitters 30, at predetermined time intervals (for example, every fifteen seconds). Also, when a predetermined manipulation is performed at the receiver 40, the initiator driving circuit 46 causes the transmitters 60 to wirelessly transmit trigger signals regardless of the periodical transmission. The timing at which the initiators 60 transmit trigger signals is regulated such that each initiator 60 performs transmission at a timing different from those of the other initiators 60. Therefore, two or more of the initiators 60 do not wirelessly transmit trigger signals simultaneously.

This embodiment has the following advantages.
(1) Each transmitter 30 is provided with the angular acceleration sensor 34. When the vehicle 10 is accelerating, each angular acceleration sensor 34 outputs to the corresponding transmission controller 31 an angular acceleration data having a positive or negative value that corresponds to a positive acceleration and the position of the associated tire. When the vehicle 10 is decelerating, each angular acceleration sensor 34 outputs to corresponding the transmission controller 31 an angular acceleration data having a negative or positive value that corresponds to a negative acceleration and the position of the associated tire. That is, when the vehicle 10 is accelerating, the angular acceleration sensor 34 of any of the transmitters 30 in the tires 20 at the front and rear left wheel positions (FL, RL) sends to the transmission controller 31 an angular acceleration data having a positive value that corresponds to a positive acceleration. On the other hand, when the vehicle 10 is accelerating, the angular acceleration sensor 34 of any of the transmitters 30 in the tires 20 at the front and rear right wheel positions (FR, RR) sends to the transmission controller 31 an angular acceleration data having a negative value that corresponds to a positive acceleration. Therefore, based on angular acceleration data from the associated angular acceleration sensor 34, the transmission controller 31 of each transmitter 30 is capable of identifying whether the transmission controller 31 is located in any of the tires 20 at the front and rear left wheel positions (FL, RL) or in any of the tires 20 at the front and rear right wheel positions (FR, RR).
(2) The configuration of the above illustrated embodiment permits each transmitter 30 to identify whether the transmitter 30 is in any of the tires 20 at the front and rear left wheel positions (FL, RL) or in any of the tires 20 at the front and rear right wheel positions (FR, RR). Therefore, each transmitter 30 does not need to transmit angular acceleration data from the angular acceleration sensor 34 to the receiver 40. In other words, the receiver 40 does not need to identify whether each transmitter 30 is provided in any of the tires 20 at the front and rear left wheel positions (FL, RL) or in any of the tires 20 at the front and rear right wheel positions (FR, RR). Accordingly, the load of data processing on the receiver 40 is reduced.
(3) The transmission controller 31 of each transmitter 30 stores an obtained result of identification in the RAM until a contrary result is obtained. In other words, the tire condition monitoring apparatus 1 of this embodiment is not configured to identify whether each transmitter 30 is located in any of the tires 20 at the front and rear left wheel positions (FL, RL) or in any of the tires 20 at the front and rear right wheel positions (FR, RR) every time a trigger signal wirelessly transmitted by the corresponding initiator 60 is detected by the trigger signal detection circuit 37 of the transmitter 30. Therefore, after detecting a trigger signal with the trigger signal detection circuit 37, each transmitter 30, without identifying the tire 20 in which the transmitter 30 is provided, can immediately wirelessly transmits data containing air pressure data and temperature data of the associated tire 20.
(4) In response to a trigger signal wirelessly transmitted by each corresponding initiator 60, the corresponding transmitter 30 wirelessly transmits data containing air pressure data and temperature data of the corresponding tire 20. Based on the received data, the receiver 40 identifies the position of the tire 20 in which the transmitter 30 that is the source of the received data is located. Therefore, even if the positions of the tires 20 relative to the vehicle 10 are changed, ID codes can be registered in the receiver 40 again based on data wirelessly transmitted from the transmitter 30 that is the source of received data.

It should be apparent to those skilled in the art that the present invention may be embodied in many other specific forms without departing from the spirit or scope of the invention. Particularly, it should be understood that the invention may be embodied in the following forms.

The above illustrated embodiment may be modified such that, only when the absolute value of an angular acceleration data from the angular acceleration sensor 34 of each transmitter 30 is equal to or more than any of threshold values indicated by alternate long and two short dashes lines in Fig. 3, the transmitter 30 identifies whether it is located in any of the tires 20 at the front and rear left wheel positions (FL, RL) or in any of the tires 20 at the front and rear right wheel positions (FR, RR). In this case, only when a predetermined acceleration (positive or negative) occurs, each transmitter 30 identifies whether it is located in any of the tires 20 at the front and rear left wheel positions (FL, RL) or in any of the tires 20 at the front and rear right wheel positions (FR, RR). Thus, whether each transmitter 30 is located in any of the tires 20 at the front and rear left wheel positions (FL, RL) or in any of the tires 20 at the front and rear right wheel positions (FR, RR) is more accurately identified.

Angular acceleration data from each angular acceleration sensor 34 may be positive or negative angular acceleration data representing a rotation direction of the corresponding tire 20.

The angular acceleration sensors 34, which function as acceleration detecting means, may be acceleration sensors. In this case, angular acceleration data from each acceleration sensor may be positive or negative acceleration data representing a rotation direction of the corresponding tire 20. That is, any form of data may be used as long as rotation direction of each tire 20 is identified.

An acceleration sensor for detecting accelerations along two axes may be provided on a steered wheel (for example, a front wheel) so that the tires 20 at the front wheel positions and the tires 20 at the rear wheel positions are distinguished from each other. In this case, when steering is performed, the tires 20 at the front wheel postions and the tires 20 at the rear wheel positions are distinguished from each other based on acceleration occurs in the steered wheels. Specifically, acceleration due to manipulation of the steering wheel occurs in the steered wheels (for example, front wheels) earlier compared to the other wheels (for example, rear wheels). Further, an acceleration that occurs in the steered wheels (for example, front wheels) due to manipulation of the steering wheel is greater than that in the other wheels (for example, rear wheels). Thus, the tires 20 at the front wheel positions and the tires 20 at the rear wheel positions can be distinguished from each other based on manipulation of the steering wheel. In this case, each transmitter 30 is capable of identifying the position of the corresponding tire 20. Accordingly, the load of data processing on the receiver 40 is further reduced.

As shown in Fig. 5, the number of the initiators 60 may be reduced to two with one of the initiators 60 being located between the tire 20 at the front left wheel position (FL) and the tire 20 at the front right wheel position (FR), and the other initiator 60 being located between the tire 20 at the rear left wheel position (RL) and the tire 20 at the rear right wheel position (RR). Also, the transmission controller 31 of each transmitter 30 changes timing to wirelessly transmit data containing air pressure data and temperature data of the corresponding tire 20 based on a result of identification that represents whether the transmitter 30 is located in any of the tires 20 at the front and rear left wheel positions (FL, RL) or in any of the tires 20 at the front and rear right wheel positions (FR, RR).

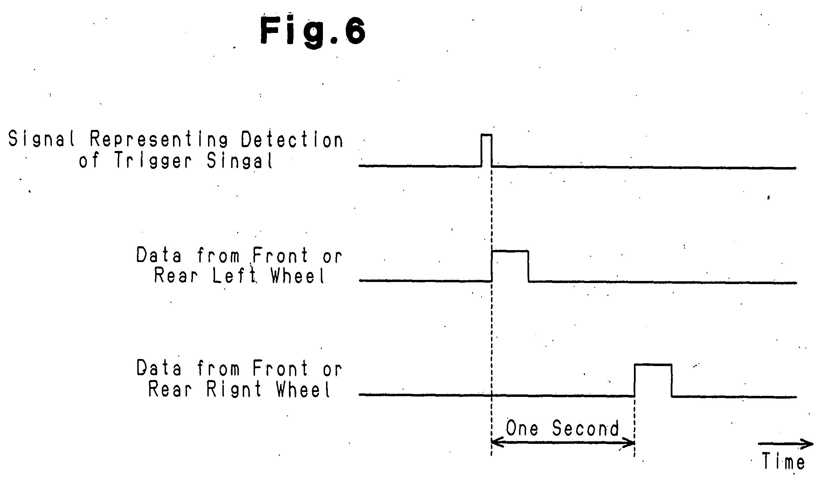

Specifically, as shown in Fig. 6, when one of the transmitters 30 is identified to be in any of the tires 20 at the front and rear left wheel positions (FL, RL) and a signal representing reception of a trigger signal from the associated trigger signal detection circuit 37 is outputted, data containing air pressure data and temperature data of the corresponding tire 20 is immediately wirelessly transmitted by the associated the transmission circuit 35. On the other hand, when one of the transmitters 30 is identified to be in any of the tires 20 at the front and rear right wheel positions (FR, RR) and a signal representing reception of a trigger signal from the associated trigger signal detection circuit 37 is outputted, data containing air pressure data and temperature data of the corresponding tire 20 is wirelessly transmitted by the associated the transmission circuit 35 after predetermined period (for example, one second).

This configuration permits the receiver 40 to reliably identify whether received data has been wirelessly transmitted from any of the tires 20 at the front and rear left wheel positions (FL, RL) or any of the tires 20 at the front and rear right wheel positions (FR, RR). As a result, by causing the front initiators 60 or the rear initiators 60 to wirelessly transmit a trigger signal, the receiver 40 is capable of identifying whether each transmitter 30 is located in any of the tires 20 at the front wheel positions (FL, FR) or any of the tires 20 at the rear wheel positions (RL, RR). Also, based on data wirelessly transmitted from the transmitters 30 at different timings, the receiver 40 is capable of identifying whether each transmitter 30 is located in any of the tires 20 at the front and rear left wheel positions (FL, RL) or any of the tires 20 at the front and rear right wheel positions (FR, RR). Thus, the receiver 40 is capable of determining the position of the tire 20 that is associated with the transmitter 30 that is the source of the received data. Further, even if the positions of the tires 20 relative to the vehicle 10 are changed, ID codes can be registered in the receiver 40 again based on data wirelessly transmitted from the transmitter 30 that is the source of received data.

In the embodiment of Figs. 1 to 4, in which the four initiators 60 are provided to correspond to the four transmitters 30, timing at which the transmitters 30 wirelessly transmit data may be changed based on the result of identification representing whether a specific one of the transmitters 30 is provided in any of the tires 20 at the front and rear left wheel positions (FL, RL) or in any of the tires 20 at the front and rear right wheel positions (FR, RR). In this case, even if a trigger signal from the initiator 60 that corresponds to the transmitter 30 of the front left wheel position (FL) is detected by the trigger signal detection circuit 37 of the transmitter 30 of the front right wheel position (FR), timing at which the transmitter 30 of the front right wheel position (FR) wirelessly transmits data is different from timing at which the transmitter 30 of the front left wheel position (FL) wirelessly transmits data. This configuration permits the receiver 40 to reliably identify whether received data has been wirelessly transmitted from either any of the tires 20 at the front and rear left wheel positions (FL, RL) or any of the tires 20 at the front and rear right wheel positions (FR, RR). This embodiment is particularly effective when the size of the vehicle 10 is small.

Each transmitter 30 may wirelessly transmit a result of identification along with data containing air pressure data and temperature data of the corresponding tire 20.

When any of the tires 20 is moved from one of the front and rear left wheel positions (FL, RL) to one of the front and rear right wheel positions (FR, RR), or when any of the tires 20 is moved from one of the front and rear right wheel positions (FR, RR) to one of the front and rear left wheel positions (FL, RL), the change in the position of the tire 20 or an identification result may be wirelessly transmitted. In other words, when the identification result stored in the RAM of the transmission controller 31 in each transmitter 30 is changed, the fact that the result has been changed or the changed identification result may be wirelessly transmitted. In this configuration, only when any of the tires 20 at the front and rear left wheel positions (FL, RL) is interchanged with any of the tires 20 at the front and rear right wheel positions (FR, RR), data representing the interchange of the tires 20 is wirelessly transmitted to the receiver 40. In the case where the rotation direction of a specific one of the tires 20 is greatly changed, that is, in the case where the vehicle 10 is moving backward, if the specific tire 20 continuously rotates in a certain direction that corresponds to the backward movement of the vehicle 10, the transmission controller 31 of the transmitter 30 in the specific tire 20 determines that the position of the tire 20 has been changed between the left wheels and the right wheels, and wirelessly transmits data representing the change in the position of the tire 20. Therefore, the transmitter 30 wirelessly transmits minimum data required for monitoring the conditions of the tire 20 to the receiver 40. As a result, power consumption of the battery 39 is suppressed, and the life of the battery 39 is thus extended.

The initiators 60 may be incorporated in the splash guards. In this case, the initiator 60 may be held between two resin sheets forming the splash guard. Alternatively, the initiator 60 may be integrally embedded in the splash guard when the splash guard is molded. The initiators 60 are not visible from the outside. Therefore, without spoiling the appearance of the splash guards, the transmitters 30 reliably detect trigger signals from the initiators 60. Since the initiators 60 are not exposed, the initiators 60 are prevented from being damaged or degraded.

The initiators 60 may be provided in side spoilers made of an insulating material such as polypropylene (PP) or ABS resin. Particularly, the initiators 60 may be provided in portions of the side spoilers that are adjacent to the tires 20.

The initiators 60 may be provided in a rear under spoiler made of an insulating material such as polypropylene (PP) or ABS resin. Particularly, the initiators 60 may be provided in portions of the rear under spoiler that are adjacent to the tires 20. If the initiators 60 are provided in insulating material such as nonmetal, trigger signals wirelessly transmitted by the initiators 60 are less likely to be affected by metal bodies of the vehicle 10. As a result, trigger signals are not attenuated by the metal bodies of the vehicle 10, and reliably detected by the trigger signal detection circuit 37 of each transmitter 30 with the trigger signal reception antenna 38. Therefore, each transmitters 30 is capable of wirelessly transmitting data containing air pressure data and temperature data of the corresponding tire 20 to the receiver 40. Thus, the receiver 40 reliably receives data from the transmitters 30.

When the vehicle 10 has a side step, such as that of a four-wheel drive vehicle, the initiator 60 may be provided in the side step or a nonmetallic element such as a resin molding of a side step.

When there is an abnormality in the pressure or the temperature of the tire 20, the abnormality may be indicated by a sound. In addition, a speaker that is mounted on the vehicle 10 in advance may be used as an informing device.

The temperature sensor 33 may be omitted. In this case, the transmitter 30 has the minimum functions. This reduces the cost.

Air pressure data transmitted by the transmitter 30 may indicate the value of the air pressure or whether the air pressure is within a permissible range.

Other than four-wheeled vehicles, the present invention may be applied to two-wheeled vehicles, such as bicycles and motor cycles, multi-wheeled busses, multi-wheeled trailers and industrial vehicles, such as forklifts. When the present invention is applied to a trailer, the receiver 40 and the display 50 are provided in the tractor.

Therefore, the present examples and embodiments are to be considered as illustrative and not restrictive and the invention is not to be limited to the details given herein, but may be modified within the scope and equivalence of the appended claims.

## Claims

1. Transmitters (30) for a tire condition monitoring apparatus, wherein one of the transmitters is provided in a tire located at a left side of a vehicle, and another transmitter is provided in a tire located at a right side of the vehicle, wherein each transmitter has condition detecting means (32, 33) for detecting condition of the associated tire, and wirelessly transmits data representing the condition of the associated tire detected by the condition detecting means, the transmitters (30) being **characterized in that**:
each transmitter (30) has acceleration detecting means (34) for detecting a direction of acceleration due to rotation of the associated tire (20), wherein, based on data representing the direction of acceleration detected by the acceleration detecting means (34), whether the transmitter (30) is located in the tire at the left side or in the tire at the right side is identified.

2. The transmitters according to claim 1, **characterized in that**, when the absolute value of data representing the direction of acceleration detected by the acceleration detecting means (34) of each transmitter (30) is equal to or greater than a predetermined threshold value, whether the transmitter (30) is located in the tire at the left side or in the tire at the right side is identified.

3. The transmitters according to claim 1 or 2, **characterized in that** the acceleration detecting means comprises angular acceleration sensors (34) each corresponding to one of the tires, wherein each angular acceleration sensor detects acceleration data based on rotation of the corresponding tire (20).

4. The transmitters according to any one of claims 1 to 3, **characterized in that** each transmitter identifies whether the transmitter is located in the tire at the left side or in the tire at the right side and stores the result of the identification.

5. The transmitters according to any one of claims 1 to 4, **characterized in that** each transmitter includes trigger signal detecting means for detecting a trigger signal,
wherein, when a trigger signal is detected by the trigger signal detecting means, the transmitters wirelessly transmit data representing the condition of the tires at different timings based on whether each transmitter is located in the tire at the left side or in the tire at the right side.

6. A tire condition monitoring apparatus, comprising:
the transmitters according to claim 5; and
trigger signal transmitting means (60) for transmitting trigger signals,
the tire condition monitoring apparatus being **characterized in that**:
the trigger signal transmitting means (60) are located in the vicinity of the tires (20) to correspond to the transmitters (30),
wherein the tire condition monitoring apparatus further comprises a receiver (40), wherein the receiver (40) receives data wirelessly transmitted by the transmitters (30) with a reception antenna, and processes the received data.

7. A tire condition monitoring apparatus, comprising:
the transmitters according to claim 5; and
trigger signal transmitting means (60) for transmitting trigger signals,
the tire condition monitoring apparatus being **characterized in that**:
the trigger signal transmitting means (60) are located between the left and right front tires of a vehicle and between the left and right rear wheels of the vehicle, respectively,
wherein the tire condition monitoring apparatus further comprises a receiver (40), wherein, based on data wirelessly transmitted from the transmitters (30) at different timings, the receiver (40) identifies the position of the transmitter (30) that is the source of received data.
